# EUROPÄISCHE PATENTSCHRIFT

(11) **EP 1 128 973 B1**
(45) Veröffentlichungstag und Bekanntmachung des Hinweises auf die Patenterteilung: **12.06.2002**
(21) Anmeldenummer: 99972163.2
(22) Anmeldetag: 04.11.1999
(51) Int. Cl.: B60J 7/12

(54) **FALTVERDECK FÜR EINEN KRAFTWAGEN**
FOLDING TOP FOR A MOTOR VEHICLE
CAPOTE ESCAMOTABLE DESTINEE A DES VEHICULES

(30) Priorität: 14.11.1998 DE 19852615
(43) Veröffentlichungstag der Anmeldung: 05.09.2001
(73) Patentinhaber: CTS Fahrzeug-Dachsysteme GmbH, 21079 Hamburg (DE)
(72) Erfinder: HALBWEISS, Thomas, D-71672 Marbach (DE); KLEIN, Berthold, D-71277 Rutesheim (DE); NEUBRAND, Frank, D-70435 Stuttgart (DE); WEZYK, Wojciech, D-71065 Sindelfingen (DE)
(74) Vertreter: Müller, Gottfried
(86) Internationale Anmeldenummer: EP9908438
(87) Internationale Veröffentlichungsnummer: WO0029236

(56) Entgegenhaltungen:
- DE-C- 943 747
- US-A- 2 860 913

## Beschreibung

Die Erfindung betrifft ein Faltverdeck für einen Kraftwagen nach dem Oberbegriff des Anspruches 1.

Aus der Druckschrift DE-PS 943 747 ist ein gattungsgemäßes Kraftfahrzeugverdeck bekannt, das zwischen einer den Fahrzeuginnenraum verschließenden Schließstellung und einer Ablagestellung verstellbar ist. Das Kraftfahrzeugverdeck umfaßt einen Verdeckbezug, der auf ein Verdeckgestänge gespannt ist, welches aus einer Mehrzahl von Quer- und Seitenbügeln besteht. Die Seitenbügel sind zweiteilig aufgebaut mit einem ersten, teilkreisförmig gebogenen Bügelteil, das an einem Gelenk gehalten und um zwei Achsen drehbar gelagert ist, und einem zweiten, horizontalen Bügelteil, das sich über ein Drehgelenk an das erste Bügelteil anschließt. In Schließstellung überspannen die beiden Bügelteile ein Seitenfenster, wobei das zweite, horizontale Bügelteil mit einem vorderen Dachbügel verbunden ist, über den die Verbindung zum Scheibenrahmen der Windschutzscheibe hergestellt wird. Zum Öffnen des Verdecks wird das gebogene Bügelteil um seine zwei Achsen verschwenkt, in Ablagestellung liegt das gebogene Bügelteil quer zur Fahrzeug-Längsrichtung und weist in Richtung der gegenüberliegenden Verdeckseite. Zugleich wird das horizontale Bügelteil um seine Gelenkachse relativ zum ersten Bügelteil um etwa 180° verdreht, so daß in Ablagestellung die dem Gelenk abgewandte, mit dem vorderen Dachbügel verbundene Stirnseite des horizontalen Bügelteils entgegengesetzt zum gebogenen Bügelteil gerichtet ist.

Der Verdeckbezug kann im vorderen Abschnitt des Faltverdecks nur am horizontalen Bügelteil und am vorderen Dachbügel befestigt werden. Aufgrund der in Ablagestellung zweifach abgewinkelten Bügelanordnung ist es nicht möglich, den Verdeckbezug auch am gebogenen Bügelteil zu befestigen, der die hintere seitliche Kante des Seitenfensters überspannt, da andernfalls der Bezug wegen der gewinkelten Ablagestellung der Bügel eine zu hohe, den Stoff schädigende Dehnung erfahren würde. Der Bezug kann nur am vorderen Gestänge des Faltverdecks - dem Dachbügel und dem horizontalen, die obere Kante des Seitenfenster überspannenden Bügelteil - befestigt werden. Im Bereich des gebogenen Bügelteils ist dagegen keine feste Verbindung zum Bezugsstoff möglich, was sich negativ auf die Dichtigkeit im Übergang von dem gebogenen Bügelteil zur seitlichen Kante des Seitenfensters auswirkt.

Das Problem der Dichtigkeit wird noch dadurch verschärft, daß die Dichtung zwischen Fensterkante und Seitenbügel in jeweils einen Teil für die obere Kante und die seitliche Kante zweigeteilt ist und daß im Bereich aneinandergrenzender Stirnseiten der Dichtung die Gefahr einer nachlassenden Dichtwirkung besteht.

Ein weiteres verstellbares Faltverdeck für ein Fahrzeug ist in der DE 196 46 035 A1 beschrieben worden. Das Faltverdeck weist einen schwenkbaren, ein Seitenfenster des Fahrzeugs teilweise umgreifenden Seitenbügel auf, der um eine horizontale Querachse quer zur Fahrzeuglängsachse verschwenkbar gehalten ist. Der Seitenbügel beschreibt bei der Überführungsbewegung von Schließ- in Ablagestellung einen Teilkreis, wobei in Ablagestellung der Bügel sich verhältnismäßig weit nach hinten in Richtung des Kofferraumes erstreckt, was bei der Dimensionierung der Ablage entsprechend berücksichtigt werden muß.

Der Erfindung liegt das Problem zugrunde, die Dichtigkeit eines Faltverdecks im Bereich der Seitenfenster zu verbessern.

Dieses Problem wird erfindungsgemäß mit den Merkmalen des Anspruches 1 gelöst.

Der beiden Schenkel des schwenkbaren Seitenbügels, insbesondere ein horizontaler und ein gebogener Schenkel, bilden ein einteiliges Bauteil, wodurch die Zahl der Freiheitsgrade reduziert ist und mögliche Fehlerquellen elimiert werden. Mit dieser Ausführung ist es möglich, sowohl die hintere als auch die obere Kante eines Seitenfensters mit nur einem Bügel des Verdeckgestänges zu übergreifen, so daß eine durchgehende, nicht durchbrochene Dichtung zwischen Fenster und Seitenbügel realisiert werden kann, die am Seitenbügel befestigt ist. Alterungsprozesse des Dichtungsmaterials oder Temperaturschwankungen beeinflussen die Dichtigkeit beim erfindungsgemäßen Faltverdeck in einem erheblich geringeren Maße, da Stoßfugen im Übergang zwischen der seitlichen Kante und der oberen Kante des Seitenfensters entfallen.

Die Dichtigkeit wird auch dadurch verbessert, daß der Bezugsstoff über die gesamte Länge des Seitenbügels mit diesem verbunden werden kann, so daß in Schließstellung des Faltverdecks der Bezugstoff sowohl an der hinteren Kante als auch an der oberen Kante des Seitenfensters fest am Seitenbügel gehalten ist. Verwerfungen des Bezugstoffs, die in Schließstellung zu Undichtigkeiten führen können, werden praktisch ausgeschlossen.

Ein weiterer Vorteil liegt darin, daß unvorhersehbare und unerwünschte Faltungen des Bezugstoffs während des Öffnens des Verdecks nicht mehr oder in geringerem Maße auftreten, da der Stoff über eine im Vergleich zum Stand der Technik größere Länge am Verdeckgestänge befestigt ist und unkontrollierbare Bewegungsmöglichkeiten des Stoffes eingeschränkt werden. Beim Überführen von Schließstellung in Ablagestellung wird der Bezugstoff stets in der vorgesehenen Weise zusammengelegt, wodurch unerwünschte Knickstellen verhindert werden und die Lebensdauer des Faltverdecks erhöht wird.

In zweckmäßiger Weiterbildung ist die Länge des horizontalen Schenkels des Seitenbügels nicht länger als die halbe Breite der Ablage, in die das Faltverdeck in Ablagestellung versenkt wird. Dies hat den Vorteil, daß die beiden Seitenbügel, die in Schließstellung gegenüberliegende Seitenfenster überspannen, in der Ablage mit einander zugewandten Stirnseiten verstaut werden können, ohne sich gegenseitig zu behindern. Dadurch ist es möglich, die Seitenbügel an beiden Seiten des Verdecks spiegelsymmetrisch mit identischer Kinematik auszubilden, wodurch eine vereinfachte konstruktive Ausführung erreicht wird. Ein weiterer Vorteil liegt darin, daß das Verdeck in Ablagestellung weniger Platz einnimmt, so daß die Ablage kleiner dimensioniert werden kann und für den Kofferraum mehr Platz zur Verfügung steht.

Der Seitenbügel ist gemäß einer bevorzugten Ausführung mit einem quer verlaufenden Dachrahmen des Verdeckgestänges verbunden, der in Schließstellung am Scheibenrahmen der Windschutzscheibe gehalten ist. Der Dachrahmen kann mehrteilig, insbesondere dreiteilig mit einem mittleren und zwei seitlichen Abschnitten ausgeführt sein, wobei die seitlichen Abschnitte über klappbare Gelenke am mittleren Abschnitt gehalten sind und die Seitenbügel mit den seitlichen Abschnitten verbunden sind. In Schließstellung liegen alle Abschnitte des Dachrahmens auseinandergeklappt in einer Reihe entsprechend der Form des Scheibenrahmens der Windschutzscheibe und bilden einen belastbarsen, eigenstabilen, in der Regel bogenförmigen Bügel. In Ablagestellung sind die seitlichen Abschnitte um ihre Gelenkachse zusammengeklappt, wodurch eine kompakte Ablage erreicht wird.

Gemäß einer weiteren bevorzugten Ausführung kann auf den vorderen Dachrahmen verzichtet werden, indem die Verbindung zwischen dem Scheibenrahmen der Windschutzscheibe und dem Faltverdeck in Schließstellung ausschließlich über die Seitenbügel hergestellt wird, die auch für die erforderliche Querspannung des Bezugstoffes sorgen. Diese Ausführung zeichnet sich durch eine sehr gewichts- und in Ablagestellung auch platzsparende Bauweise aus.

Weitere Vorteile und zweckmäßige Ausführungsformen sind den weiteren Ansprüchen, der Figurenbeschreibung und den Zeichnungen zu entnehmen. Es zeigen:
- Fig. 1: eine perspektivische Ansicht eines erfindungsgemäßen Faltverdecks in Schließstellung,
- Fig. 2 bis: verschiedene Zwischenstellungen des Faltverdecks
- Fig. 5: zwischen Schließ- und Ablagestellung,
- Fig. 6: das Faltverdeck in Ablagestellung.

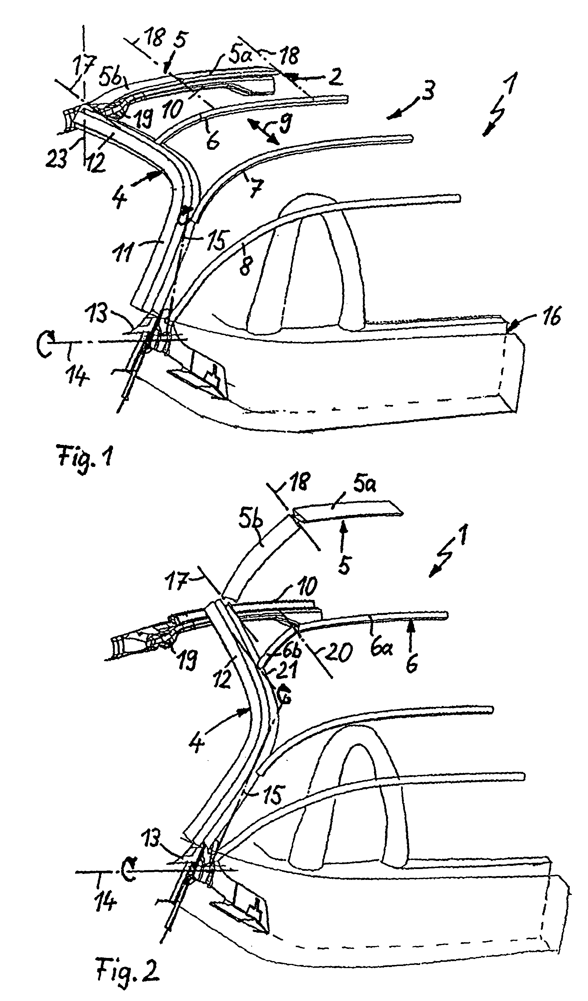

Das in Fig. 1 dargestellte Faltverdeck 1 kann zwischen der gezeigten Schließstellung 2 und einer Ablagestellung 22, in der das Faltverdeck 1 in einer Ablage 16 verstaut ist, verstellt werden. Das Faltverdeck 1 besteht aus einem Verdeckgestänge 3 mit einer Mehrzahl kinematisch verbundener Gestängeteile 4 bis 8 sowie einem in der Figur nicht gezeigten Verdeckbezug, der am Verdeckgestänge 3 befestigt ist. Das Verdeckgestänge 3 umfaßt einen im Fensterbereich angeordneten Seitenbügel 4, einem vorderen, querliegenden Dachrahmen 5 und diverse Stützspriegel 6, 7 und 8, die sich quer zur Fahrzeuglängsrichtung 9 bzw. zur Verstellrichtung 9 zwischen dem Seitenbügel 4 und einem in Fig. 1 nicht gezeigten, gegenüberliegenden Seitenbügel auf der anderen Fahrzeugseite erstrecken. In Schließstellung 2 ist das Faltverdeck 1 mit einem Scheibenrahmen 10 der Fahrzeug-Windschutzscheibe verbunden. Das Faltverdeck 1 weist zweckmäßig nur einen Freiheitsgrad für das Öffnen und Schließen des Verdecks auf; alle weiteren Bewegungsmöglichkeiten des Verdecks sind kinematisch zwangsgeführt und hängen von diesem Freiheitsgrad ab.

Es kann aber auch zweckmäßig sein, zumindest zwei Freiheitsgrade für das Faltverdeck vorzusehen, indem insbesondere ein seitliches Einschwenken der Seitenbügel und das translatorische Vor- und Zurückklappen in Fahrzeuglängsrichtung als unabhängige Bewegungsmöglichkeiten zugelassen werden, die bevorzugt über jeweils einen Antrieb zu betätigen sind.

Der einteilig ausgebildete Seitenbügel 4 besteht aus zwei miteinander verbundenen Schenkeln, einem sich in Schließstellung 2 näherungsweise vertikal erstreckenden Schenkel 11 und einem horizontalen Schenkel 12. Die beiden Schenkel 11, 12 des Seitenbügels 4 schließen einen Winkel von etwa 90° ein. Die Dimensionen des Seitenbügels 4 werden so gewählt, daß ein Seitenfenster des Kraftfahrzeugs sowohl über seine hintere, vertikal verlaufende Fensterkante als auch über seine obere, horizontal verlaufende Fensterkante vollständig von den Schenkel 11, 12 des Seitenbügels 4 überdeckt wird. Die freie Stirnseite des horizontalen Schenkels 12 reicht in Schließstellung bis zum Scheibenrahmen 10 der Windschutzscheibe, so daß in Schließstellung bei geschlossenem Seitenfenster alle freiliegenden Kanten des Seitenfensters von nur einem Gestängeteil, dem Seitenbügel 4, abgedeckt werden.

Der Seitenbügel 4 ist an einem an der Fahrzeugkarosserie angeordneten Gelenk 13 gehalten, das zwei Bewegungsmöglichkeiten gestattet: eine Drehbewegung um eine horizontale Drehachse 14 und eine Drehbewegung um eine zur horizontalen Drehachse 14 winklig verlaufende Drehachse 15. Die beiden Drehachsen 14, 15 können sich schneiden oder sich kreuzen; die Drehachsen schließen insbesondere einen geringfügig kleineren Winkel als 90° ein, wobei in Schließstellung 2 die Drehachse 15 gegenüber einer Vertikalen geringfügig zur Fahrzeuginnenseite hin geneigt ist. Die Drehbewegungen um die beiden Drehachsen sind zweckmäßig gekoppelt, so daß bei einer manuell oder motorisch ausgelösten Verstellbewegung des Faltverdecks in Fahrzeuglängsrichtung 9 der Seitenbügel 4 eine räumliche, kinematisch zwangsgeführte Drehbewegung mit gleichzeitiger Drehung um beide Drehachsen 14, 15 ausführt. Diese räumliche Drehbewegung ermöglicht es dem Seitenbügel 4, eine Bewegung aus der Schließposition 2 in der Ebene des Seitenfensters hin zur Ablageposition durchzuführen, in der der Seitenbügel 4 in einer waagrechten Ebene in der Ablage 16 verstaut ist und die Stirnseite des horizontalen Schenkels 12 des Seitenbügels 4 quer zur Fahrzeuglängsrichtung 9 liegt und in Richtung der gegenüberliegenden Fahrzeug- bzw. Verdeckseite weist.

Über die gesamte Länge des Seitenbügels 4 - am vertikalen Schenkel 11 und am horizontalen Schenkel 12 sowie im Übergang zwischen beiden Schenkeln - ist der Verdeckbezug des Faltverdecks am Seitenbügel befestigt, so daß kontinuierlich über die Länge des Seitenbügels eine auf den Verdeckbezug wirkende Spannung aufgebaut und aufrecht erhalten werden kann. Dadurch ist die Gefahr reduziert, daß der Bezugstoff aufgrund einer ungleichmäßigen Spannungsverteilung Falten wirft, die Ursache von Undichtigkeiten sein können und außerdem die Gefahr von Spannungsspitzen bergen, welche zu einer Schädigung des Stoffes führen können. Ein weiterer Vorteil der kontinuierlichen Befestigung des Verdeckbezugs am Seitenbügel liegt in der Reduzierung des Fahrgeräuschs.

Am Seitenbügel 4 ist außerdem eine Dichtung in Form einer Dichtlippe auf der dem Seitenfenster zugewandten Seite des Seitenbügels befestigt. Die Dichtung kann über die Länge des Seitenbügels einstückig ausgeführt werden, wodurch Dichtigkeitsprobleme im Übergang zwischen den Schenkeln 11 und 12 des Seitenbügels 4 vermieden werden. Außerdem werden die Herstellungsund Montagekosten sowohl für die Dichtung als auch für den Seitenbügel selbst gesenkt.

Die Stirnseite des horizontalen Schenkels 12 ist gelenkig mit dem vorderen, quer verlaufenden Dachrahmen 5 verbunden, wobei eine erste Gelenkachse 17 des Gelenks zwischen dem horizontalen Schenkel 12 und dem Dachrahmen 5 in Schließstellung 2 parallel zur Fahrzeuglängsachse 9 und eine zweite Gelenkachse 23 parallel zur Fahrzeug-Hochachse verläuft.

Der Dachrahmen 5, der im Ausführungsbeispiel in Schließstellung 2 über die Seitenbügel 4 mit Hilfe eines Verschlusses 19 am Scheibenrahmen 10 gehalten ist, besteht aus drei Abschnitten, einem mittleren Abschnitt 5a sowie zwei äußeren, seitlichen Abschnitten 5b, von denen in Fig. 1 nur einer dargestellt ist. Die seitlichen Abschnitte 5b sind über jeweils ein Gelenk klappbar mit dem mittleren Abschnitt 5a verbunden, wobei die Gelenkachsen 18 in Schließstellung 2 des Verdecks näherungsweise parallel zur Fahrzeuglängsachse 9 verlaufen. Am Scheibenrahmen 10 ist eine Dichtung befestigt, die in Schließstellung 2 über die Länge des Scheibenrahmens vom Dachrahmen 5 beaufschlagt wird. Der Verdeckbezug ist am Dachrahmen 5 befestigt, ebenfalls über die gesamte, in Querrichtung gemessene Länge des Dachrahmens 5.

Alternativ oder zusätzlich zu seitlichen Verschlüssen kann auch ein zentraler Verschluß in der Mitte des Dachrahmens vorgesehen sein. Anstelle der Befestigung am Scheibenrahmen kann die Dichtung auch am Dachrahmen angeordnet werden.

Es kann gegebenenfalls zweckmäßig sein, den vorderen Dachrahmen 5 einteilig auszuführen oder auf den Dachrahmen vollständig zu verzichten. Im letzteren Fall wird die Spannung im Bezugstoff im vorderen Abschnitt des Faltverdecks in Schließstellung durch die Seitenbügel bzw. die von den Seitenbügeln erzeugte, nach außen gerichtete Querkraft auf den Bezugstoff aufgebracht. Zwischen den Seitenbügeln kann ein Zugseil befestigt sein, welches in Schließstellung über den Scheibenrahmen der Windschutzscheibe geführt ist und an dem der Verdeckbezug gehalten ist.

An den Seitenbügeln 4 sind Stützspriegel 6, 7, und 8 gehalten, die sich quer zur Fahrzeuglängsrichtung 9 über das Fahrzeuginnere erstrecken und parallel zum vorderen Dachrahmen 5 verlaufen. Die Stützspriegel 6 bis 8 erzeugen eine zusätzliche Spannung im Bezugstoff und geben dem Verdeck Stabilität. Die Stützspriegel 6, 7 sind in analoger Weise wie der Dachrahmen 4 gelenkig mit den Seitenbügeln verbunden; die Stützspriegel können einteilig oder mehrteilig aufgebaut sein, insbesondere dreiteilig mit zur Fahrzeuglängsrichtung 9 parallelen Gelenkachsen und zur Fahrzeug-Hochachse parallelen Gelenkachsen. Im Ausführungsbeispiel ist der dem Dachrahmen benachbarte Stützspriegel 6 dreiteilig aufgebaut, die beiden vom Dachrahmen weiter entfernteren Stützspriegel 7 und 8 sind dagegen einteilig aufgebaut. Gegebenenfalls ist der hinterste Stützspiegel 8 nicht an den Seitenbügeln, sondern unmittelbar am Lager des Verdecks gehalten.

Fig. 2 zeigt eine Zwischenstellung des Faltverdecks 1 nach dem Lösen des Verschlusses 19, kurz nach dem Beginn der Überführung von Schließstellung in Ablagestellung. Das Faltverdeck 1 ist bereits geringfügig in Fahrzeuglängsrichtung in Richtung der Ablagestellung gekippt. Der vordere Dachrahmen 5 ist vom Scheibenrahmen 10 abgehoben und der Seitenbügel 4 ist teilweise um die Drehachsen 14 und 15 des Gelenks 13 verschwenkt. In dieser gekippten Lage des Faltverdecks 1 ist die Stirnseite des Schenkels 12 des Seitenbügels 4 gegenüber der Schließstellung sowohl nach hinten als auch quer in Richtung des Fahrzeuginneren und auch zunächst nach oben verschwenkt. Die Verschiebung in Querrichtung hat eine Verkürzung des Abstandes zwischen den Stirnseiten gegenüberliegender Seitenbügel zur Folge, wobei diese Verkürzung zwangsläufig ein Zusammenklappen der Abschnitte 5a und 5b des Dachrahmens 5 um die Drehachse 18 und außerdem ein gleichzeitiges Verdrehen des seitlichen Abschnitts 5b des Dachrahmens 5 relativ zum Schenkel 12 um die Drehachse 17 zur Folge hat.

Zugleich wird der ebenfalls dreigeteilte Stützspriegel 6 um eine zwischen mittlerem und seitlichem Abschnitt 6a, 6b verlaufende Drehachse 20 sowie eine Drehachse 21 am Schenkel 12 geklappt.

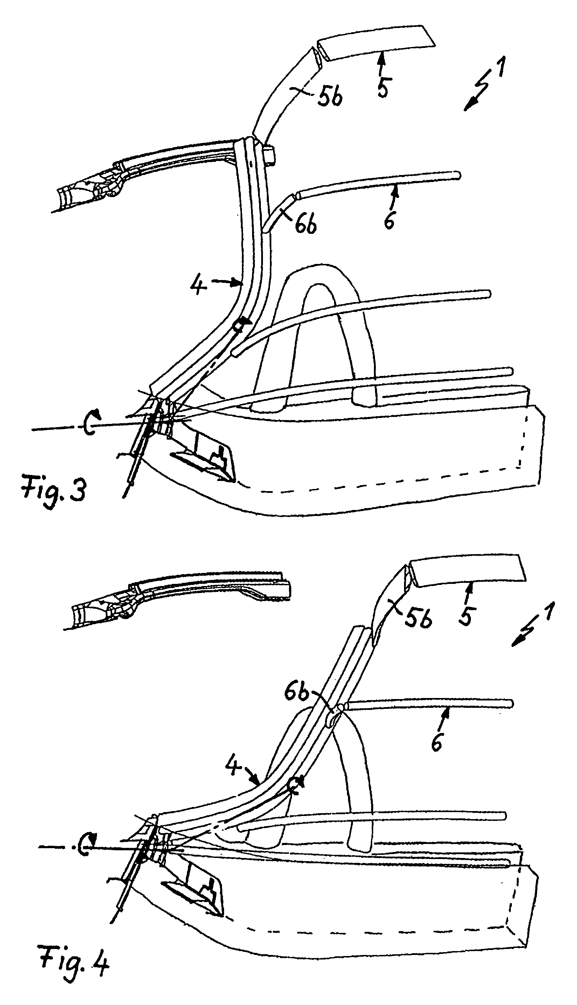

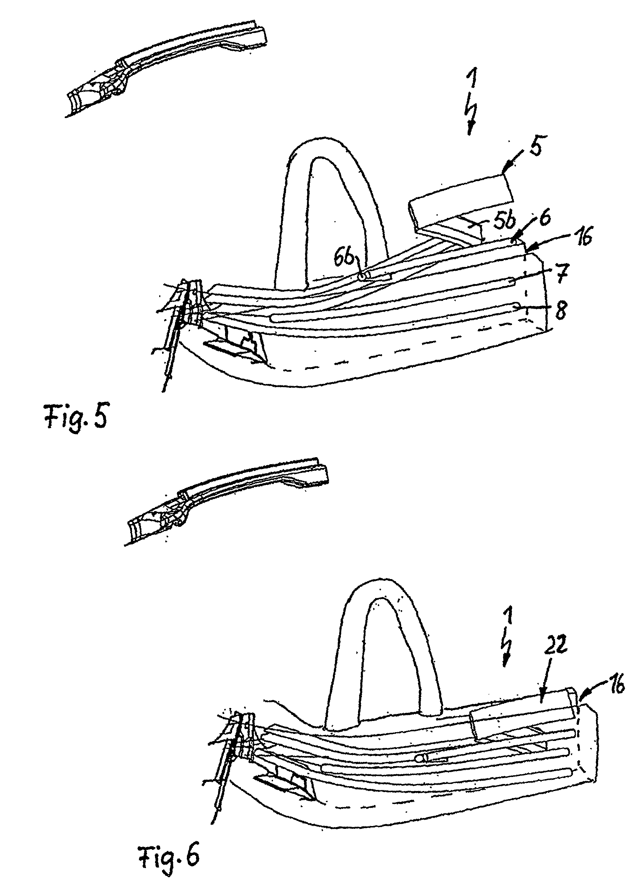

In den Fig. 3 und 4 sind weitere, in Richtung der Ablagestellung verschobene Zwischenstellungen des Faltverdecks 1 dargestellt. Die seitlichen Abschnitte 5b, 6b von Dachrahmen 5 und Spriegel 6 richten sich dabei immer stärker von einer in Schließstellung näherungsweise horizontalen Lage in eine zunehmend vertikale Lage auf.

Durch das Einklappen des Seitenbügels 4 in Richtung des Fahrzeuginneren und das Zusammenklappen der Spriegel 5 und 6 wird der Bezugstoff des Verdecks entspannt, so daß der Bezugstoff in vorgesehener Weise in Falten zusammengelegt werden kann.

In Fig. 5 befindet sich das Faltverdeck 1 bereits teilweise in der Ablage 16. Die hinteren Stützspriegel 7 und 8 haben bereits im wesentlichen ihre endgültige Ablagestellung in der Ablage 16 erreicht. Der dreigeteilte Dachrahmen 5 und der Spriegel 6 werden Z-förmig zusammengefaltet, indem die seitlichen Abschnitte 5b und 6b nach Überschreiten ihrer vertikalen Position in eine horizontale Position in Ablagestellung verschwenkt werden, wobei die Abschnitte 5b, 6b in Ablagestellung und in Schließstellung entgegengesetzt horizontal ausgerichtet sind.

In Fig. 6 liegt das Faltverdeck 1 in seiner Ablagestellung 22, in der das Faltverdeck vollständig in die Ablage 16 versenkt ist. Gegebenenfalls kann die Ablage 16 mit einem Deckel bzw. mit einer Abdeckung verschlossen werden.

Die Anbindung des Stoffes am Fahrzeug im hinteren Bereich des Faltverdecks kann sowohl lose als auch fest verbunden erfolgen. Das gezeigte Faltverdeck eignet sich für insbesondere zweisitzige Fahrzeuge, bei denen die Seitenfenster kürzer sind als die halbe Ablagenbreite für das Faltverdeck, so daß die Seitenbügel mit ihren die Oberkante der Seitenfenster übergreifenden horizontalen Schenkeln in Ablagestellung auf gleicher Höhe, spiegelsymmetrisch zueinander und ohne gegenseitige Behinderung angeordnet werden können.
Das Faltverdeck kann manuell oder elektromotorisch zwischen Schließstellung und Ablagestellung verstellt werden.

## Patentansprüche

1. Faltverdeck für einen Kraftwagen, das zwischen einer Schließstellung (2) und einer Ablagestellung (22) verstellbar ist, mit einem Verdeckgestänge (3) und einem vom Verdeckgestänge (3) getragenen Verdeckbezug, und mit einem Seitenbügel (4) des Verdeckgestänges (3), der zwei winklig angeordnete Schenkel (11, 12) umfaßt, von denen ein in Schließstellung (2) vertikaler Schenkel (11) des Seitenbügels (4) im Seitenbereich des Verdeckgestänges (3) über ein an der Fahrzeugkarosserie angeordnetes Gelenk (13), welches eine erste Achse (14) sowie eine zur ersten Achse (14) winklig verlaufende zweite Achse (15) aufweist, schwenkbar gehalten ist, wobei in Ablagestellung (22) ein Schenkel (12) des Seitenbügels (4) quer zur Fahrzeug-Längsrichtung (9) verläuft und die dem Gelenk (13) abgewandte Stirnseite des Schenkels (12) dem dem Gelenk (13) gegenüberliegenden Seitenbereich des Verdeckgestänges (3) zugewandt ist,
**dadurch gekennzeichnet,**
**daß** der schwenkbare Seitenbügel (4) als einteiliges Bauteil ausgebildet ist und daß der horizontale Schenkel (12) des Seitenbügels (4) in Schließstellung (2) des Faltverdecks (1) sich bis zu einem Scheibenrahmen (10) der Windschutzscheibe erstreckt und unmittelbar am Scheibenrahmen (10) gehalten ist.

2. Faltverdeck nach Anspruch 1,
**dadurch gekennzeichnet,**
**daß** die Länge eines Schenkels (12) des Seitenbügels (4) maximal der halben Breite einer Ablage (16) für das Faltverdeck (1) in Ablagestellung (22) entspricht.

3. Faltverdeck nach Anspruch 1 oder 2,
**dadurch gekennzeichnet,**
**daß** über die Länge des Seitenbügels (4) eine Dichtung für eine flüssigkeitsdichte Verbindung zwischen Faltverdeck (1) und Seitenfenster angeordnet ist.

4. Faltverdeck nach einem der Ansprüche 1 bis 3,
**dadurch gekennzeichnet,**
**daß** ein Schenkel (12) des Seitenbügels (4) mit einem vorne quer verlaufenden Dachrahmen (5) verbunden ist, der in Schließstellung (2) am Scheibenrahmen (10) der Windschutzscheibe gehalten ist.

5. Faltverdeck nach Anspruch 4,
**dadurch gekennzeichnet,**
**daß** der Dachrahmen (5) in einen mittleren und zwei seitliche Abschnitte (5a, 5b) dreigeteilt ist, wobei die beiden seitlichen Abschnitte (5b) über jeweils ein Gelenk mit dem mittleren Abschnitt (5a) klappbar verbunden sind.

6. Faltverdeck nach Anspruch 5,
**dadurch gekennzeichnet,**
**daß** in Schließstellung (2) die Gelenkachsen (18) der Gelenke parallel zur Fahrzeuglängsrichtung (9) verlaufen.

7. Faltverdeck nach Anspruch 4,
**dadurch gekennzeichnet,**
**daß** der Dachrahmen (5) einteilig ausgeführt ist.

8. Faltverdeck nach Anspruch 1 bis 3,
**dadurch gekennzeichnet,**
**daß** auf einen am Scheibenrahmen der Windschutzscheibe gehaltenen Dachrahmen verzichtet wird.

9. Faltverdeck nach Anspruch 8,
**dadurch gekennzeichnet,**
**daß** ein Schenkel (12) des Seitenbügels (4) in Schließstellung (2) ausschließlich am Scheibenrahmen (10) der Windschutzscheibe gehalten ist.

10. Faltverdeck nach einem der Ansprüche 1 bis 9,
**dadurch gekennzeichnet,**
**daß** an einem Schenkel (12) des Seitenbügels (4) zumindest ein Stützspriegel (6, 7, 8) gehalten ist, der sich über die Breite des Faltverdecks (1) erstreckt.

11. Faltverdeck nach Anspruch 10,
**dadurch gekennzeichnet,**
**daß** der Stützspriegel (7, 8) einteilig ausgebildet ist.

12. Faltverdeck nach Anspruch 10,
**dadurch gekennzeichnet,**
**daß** der Stützspriegel (6) mehrteilig ausgebildet ist.

13. Faltverdeck nach einem der Ansprüche 1 bis 12,
**dadurch gekennzeichnet,**
**daß** am Scheibenrahmen (10) der Windschutzscheibe eine Dichtung für eine flüssigkeitsdichte Verbindung zum Faltverdeck (1) angeordnet ist.

14. Faltverdeck nach einem der Ansprüche 1 bis 13,
**dadurch gekennzeichnet,**
**daß** der Seitenbügel (4) im wesentlichen über seine gesamte Länge Träger des Verdeckbezugs ist.

15. Faltverdeck nach einem der Ansprüche 1 bis 14,
**dadurch gekennzeichnet,**
**daß** der Seitenbügel (4) im wesentlichen über seine gesamte Länge Träger einer Dichtung ist.

## Claims

1. A convertible top for an automobile which can be adjusted between a closed position (2) and a folded-down position (22), having a convertible-top mechanism (3) and a convertible-top fabric which is supported by the convertible-top mechanism (3), and having a side bar (4) of the convertible-top mechanism (3), which comprises two limbs (11, 12) arranged at an angle, of which one limb (11), which is vertical in the closed position (2), of the side bar (4), in the side region of the convertible-top mechanism (3), is held pivotably by means of a joint (13) which is arranged on the vehicle body and has a first axis (14) and a second axis (15) running at an angle to the first axis (14), in which case, in the folded-down position (22), one limb (12) of the side bar (4) runs transversely with respect to the longitudinal direction (9) of the vehicle, and that end side of the limb (12) which is remote from the joint (13) faces toward that side region of the convertible-top mechanism (3) which lies opposite the joint (13), wherein the pivotable side bar (4) is designed as a single-part component, and wherein the horizontal limb (12) of the side bar (4), in the closed position (2) of the convertible top (1), extends as far as a window frame (10) of the windshield and is held directly on the window frame (10).

2. The convertible top as claimed in claim 1, wherein the length of one limb (12) of the side bar (4) corresponds to at most half the width of a compartment (16) for the convertible top (1) in the folded-down position (22).

3. The convertible top as claimed in claim 1 or 2, wherein a seal for providing a liquidtight connection between convertible top (1) and side window is arranged over the length of the side bar (4).

4. The convertible top as claimed in one of claims 1 to 3, wherein one limb (12) of the side bar (4) is connected to a roof frame (5) which runs transversely at the front and in the closed position (2) is held on the window frame (10) of the windshield.

5. The convertible top as claimed in claim 4, wherein the roof frame (5) is divided into three sections, namely a central section and two side sections (5a, 5b), the two side sections (5b) being foldably connected to the central section (5a) by means of one joint in each case.

6. The convertible top as claimed in claim 5, wherein, in the closed position (2), the axes (18) of the joints run parallel to the longitudinal direction (9) of the vehicle.

7. The convertible top as claimed in claim 4, wherein the roof frame (5) is of single-part design.

8. The convertible top as claimed in claims 1 to 3, wherein a roof frame held on the window frame of the windshield is dispensed with.

9. The convertible top as claimed in claim 8, wherein one limb (12) of the side bar (4), in the closed position (2), is held only on the window frame (10) of the windshield.

10. The convertible top as claimed in one of claims 1 to 9, wherein at least one support bow (6, 7, 8), which extends across the width of the convertible top (1), is held on one limb (12) of the side bar (4).

11. The convertible top as claimed in claim 10, wherein the support bow (7, 8) is of single-part design.

12. The convertible top as claimed in claim 10, wherein the support bow (6) is of multipart design.

13. The convertible top as claimed in one of claims 1 to 12, wherein a seal for providing a liquidtight connection with respect to the convertible top (1) is arranged on the window frame (10) of the windshield.

14. The convertible top as claimed in one of claims 1 to 13, wherein the side bar (4) supports the convertible-top fabric substantially over its entire length.

15. The convertible top as claimed in one of claims 1 to 14, wherein the side bar (4) bears a seal substantially over its entire length.

## Revendications

1. Capote pliante pour une voiture automobile, qui peut être déplacée entre une position de fermeture (2) et une position de rangement (22), avec une tringlerie de capote (3) et une toile de capote portée par la tringlerie de capote (3), et avec un arceau latéral (4) de la tringlerie de capote (3), qui comprend deux branches (11, 12) disposées de façon inclinée, dont une branche (11) de l'arceau latéral (4), verticale en position de fermeture (2), est attachée de façon articulée dans la région latérale de la tringlerie de capote (3) à l'aide d'une articulation (13) disposée sur la carrosserie du véhicule, et qui présente un premier axe (14) ainsi qu'un second axe (15) orienté en oblique par rapport au premier axe (14), une branche (12) de l'arceau latéral (4) étant, en position de rangement (22), orientée transversalement à la direction longitudinale (9) du véhicule et la face d'extrémité de la branche (12) située à l'opposé de l'articulation (13) étant tournée vers la région latérale de la tringlerie de capote (3) qui fait face à l'articulation (13), **caractérisée en ce que** l'arceau latéral basculant (4) est constitué par un composant en une seule pièce et **en ce qu'**en position de fermeture (2) de la capote pliante (1), la branche horizontale (12) de l'arceau latéral (4) s'étend jusqu'à un encadrement (10) de la vitre du pare-brise et est attachée directement à l'encadrement (10) de la vitre.

2. Capote pliante suivant la revendication 1, **caractérisée en ce que** la longueur d'une branche (12) de l'arceau latéral (4) correspond au maximum à la moitié de la largeur d'un rangement (16) pour la capote pliante (1) en position de rangement (22).

3. Capote pliante suivant la revendication 1 ou 2, **caractérisée en ce qu'**un joint d'étanchéité est disposé sur la longueur de l'arceau latéral (4) pour un assemblage étanche aux liquides entre la capote pliante (1) et la fenêtre latérale.

4. Capote pliante suivant l'une quelconque des revendications 1 à 3, **caractérisée en ce qu'**une branche (12) de l'arceau latéral (4) est fixée à un cadre de toit (5) orienté transversalement à l'avant, qui en position fermée (2) est attaché à l'encadrement (10) de la vitre du pare-brise.

5. Capote pliante suivant la revendication 4, **caractérisée en ce que** le cadre de toit (5) est divisé en trois parties, une portion centrale et deux portions latérales (5a, 5b), dans lesquelles les deux portions latérales (5b) sont attachées de façon rabattable chaque fois par une articulation à la portion centrale (5a).

6. Capote pliante suivant la revendication 5, **caractérisée en ce qu'**en position de fermeture (2) les axes de pivotement (18) des articulations sont parallèles à la direction longitudinale (9) du véhicule.

7. Capote pliante suivant la revendication 4, **caractérisée en ce que** le cadre de toit (5) est réalisé en une seule pièce.

8. Capote pliante suivant une revendication 1 à 3, **caractérisée en ce que** l'on a supprimé un cadre de toit attaché à l'encadrement de la vitre du pare-brise.

9. Capote pliante suivant la revendication 8, **caractérisée en ce qu'**une branche (12) de l'arceau latéral (4) est, en position de fermeture (2), attachée exclusivement à l'encadrement (10) de la vitre du pare-brise.

10. Capote pliante suivant l'une quelconque des revendications 1 à 9, **caractérisée en ce qu'**au moins un arceau de soutien (6, 7, 8), qui s'étend sur la largeur de la capote pliante (1), est attaché à une branche (12) de l'arceau latéral (4).

11. Capote pliante suivant la revendication 10, **caractérisée en ce que** l'arceau de soutien (7, 8) est réalisé en une seule pièce.

12. Capote pliante suivant la revendication 10, **caractérisée en ce que** l'arceau de soutien (6) est réalisé en plusieurs parties.

13. Capote pliante suivant l'une quelconque des revendications 1 à 12, **caractérisée en ce qu'**un joint d'étanchéité est disposé sur l'encadrement (10) de la vitre du pare-brise pour un assemblage étanche aux liquides avec la capote pliante (1).

14. Capote pliante suivant l'une quelconque des revendications 1 à 13, **caractérisée en ce que** l'arceau latéral (4) constitue, sensiblement sur toute sa longueur, un support de la toile de la capote.

15. Capote pliante suivant l'une quelconque des revendications 1 à 14, **caractérisée en ce que** l'arceau latéral (4) constitue le support d'un joint d'étanchéité sensiblement sur toute sa longueur.
